# EUROPÄISCHE PATENTSCHRIFT

(11) **EP 0 529 252 B1**
(45) Veröffentlichungstag und Bekanntmachung des Hinweises auf die Patenterteilung: **30.08.1995**
(21) Anmeldenummer: 92111561.4
(22) Anmeldetag: 08.07.1992
(51) Int. Cl.: F16B 39/02

(54) **Achsmutter**
Nut for a shaft
Ecrou pour arbre

(30) Priorität: 28.08.1991 DE 4128508
(43) Veröffentlichungstag der Anmeldung: 03.03.1993
(73) Patentinhaber: BPW Bergische Achsen Kommanditgesellschaft, 51674 Wiehl (DE)
(72) Erfinder: Leidig, Hans-Josef, W-5226 Reichshof (DE)
(74) Vertreter: Stenger, Watzke & Ring Patentanwälte

(56) Entgegenhaltungen:
- EP-A- 0 407 719
- DE-U- 1 976 012
- US-A- 4 121 871

## Beschreibung

Die Erfindung betrifft ein Radlager, insbesondere für Anhängerachsen, mit einer auf einem Achsschenkel mittels Lagern drehbar gelagerten Nabe, die durch eine auf das freie Ende des Achsschenkels aufgeschraubte Achsmutter gehalten ist, wobei im freien Ende des Achsschenkels sich orthogonal kreuzende Bohrungen und in einer Krone der Achsmutter axial verlaufende Schlitze zum Einführen eines Verriegelungsbolzens angeordnet sind.

Aus der EP-A-0 407 719 ist ein Radlager für Anhängerachsen bekannt, dessen Achsmutter mit einem nahe der Außenseite angeordneten radialen Schlitz versehen ist, wobei der freistehende, federnde Teil mit wenigstens einer Klemmschraube gegen den innenliegenden Teil der Achsmutter verspannbar ist. Mit dieser bekannten Achsmutter ist zwar eine stufenlos Lagereinstellung möglich. Beim bestimmungsgemäßen Gebrauch des Radlagers kann es aber passieren, daß die Achsmutter sich in Löserichtung verstellt, weil die Klemmschraube bei der Montage nicht richtig angezogen worden ist oder sich wieder gelöst hat. Aus sicherheitstechnischen Gründen ist deshalb die bekannte Achsmutter mit dem radialen Schlitz bisher in der Praxis nicht eingesetzt worden.

Bei einer bekannten Sicherung für Achsmuttern nach DE-U-1 976 012 sind im freien Ende des Achsschenkels sich orthogonal kreuzende Bohrungen und in einer Krone der Achsmutter axial verlaufende Schlitze zum Einführen eines Verriegelungsbolzens angeordnet. Die hieraus bekannte Achsmutter hat insgesamt sechs axial verlaufende Schlitze mit einer symmetrischen Teilung von 60°. Die Achsmutter muß deshalb bei der Lagereinstellung immer um einen Winkel von mindestens 30° gedreht werden, bis wieder eine Verriegelungslage erreicht ist. Dieser Mindestverdrehwinkel ist zu groß, um das Lagerspiel in axialer Richtung optimal einstellen zu können.

Der Erfindung liegt die **Aufgabe** zugrunde, eine Konstruktion zu schaffen, mit der eine sichere und gleichzeitig feinere Lagereinstellung möglich ist.

Die **Lösung** dieser Aufgabenstellung durch die Erfindung ist dadurch gekennzeichnet, daß die Teilung der Schlitze in der Krone der Achsmutter asymmetrisch ist.

Mit der erfindungsgemäßen asymmetrischen Teilung der Schlitze ergibt sich ein Mindestverdrehwinkel der Achsmutter erheblich unter 30°, ohne daß die Krone der Achsmutter durch die nebeneinander liegenden Schlitze zu stark geschwächt wird.

Bei einer bevorzugten Ausführungsform der Erfindung beträgt die Teilung im Uhrzeigersinn gesehen zweimal 60°, einmal 45°, wieder zweimal 60° und noch einmal 75°. Mit dieser Weiterbildung ist es möglich, den Mindestverdrehwinkel auf 15° zu reduzieren. Mit diesem Verdrehwinkel werden in Abhängigkeit von der Steigung des Gewindes an der Achsmutter und dem Achsschenkel axiale Verstellwege erreicht, die nur einige 100stel Millimeter betragen und deshalb eine optimale Lagereinstellung ermöglichen. Gleichzeitig kann das eingestellte Lagerspiel in herkömmlicher Weise mit einem durch einen Schlitz der Achsmutter in eine Bohrung des Achsschenkels eingesteckten Verriegelungsbolzen fixiert werden.

In weiterer Ausgestaltung der Erfindung wird eine Sicherung für den Verriegelungsbolzen vorgeschlagen, die aus einem im Kopf des Verriegelungsbolzens angeordneten Loch und aus einer durch dieses Loch gesteckten Federklammer besteht. Dabei sollte die Federklammer die Krone der Achsmutter auf einem Winkel von mehr als 270° umschlingen und wenigstens an einem Ende mit einem nach innen umgebogenen Haken versehen sein, der in einen Schlitz der Achsmutter eingreifen kann. Hierdurch wird der Vorteil einer ausreichend feinen Lagereinstellung mit dem weiteren Vorteil einer sehr sicheren Fixierung des einmal eingestellten Lagerspiels verbunden, da sich der Verriegelungsbolzen beim bestimmungsgemäßen Betrieb nicht lösen kann.

Weitere Einzelheiten und Vorteile ergeben sich aus der nachfolgenden Beschreibung der zugehörigen Zeichnungen, in denen ein erfindungsgemäß ausgebildetes Radlager schematisch dargestellt ist. In den Zeichnungen zeigt:

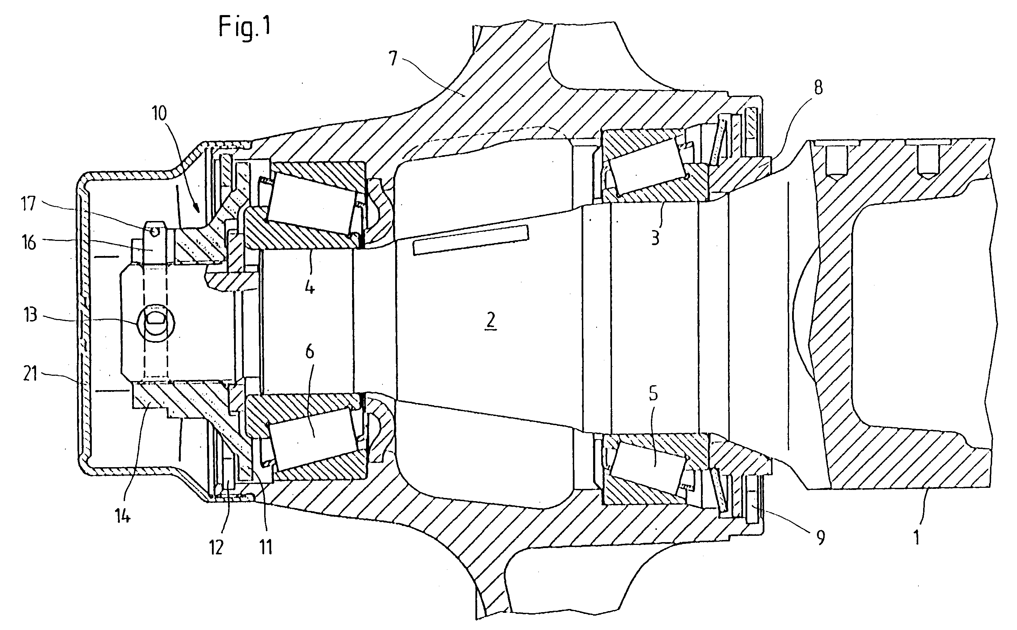

- Fig. 1: ein Radlager im Längsschnitt;
- Fig. 2: eine Draufsicht auf die beim Radlager nach Fig. 1 verwendete Achsmutter;
- Fig. 3: einen Querschnitt durch die Achsmutter gemäß der Schnittlinie III-III in Fig. 2 und
- Fig. 4: eine Draufsicht der auf dem Achsschenkel montierten Achsmutter.

Am Ende eines Achskörpers 1 ist ein Achsschenkel 2 befestigt oder angeformt, der mit zwei im Abstand voneinander angeordneten Lagersitzen 3,4 für ein inneres Kegelrollenlager 5 und ein äußeres Kegelrollenlager 6 versehen ist. Auf den beiden Kegelrollenlagern 5,6 ist eine einteilig ausgebildete Nabe 7 frei drehbar gelagert. Am äußeren Umfang der Nabe 7 können auf einer Seite eine Bremstrommel und auf der gegenüberliegenden Seite ein Rad mit Radbolzen befestigt werden.

Auf der Außenseite des inneren Kegelrollenlagers 5 ist ein Stoßring 8 angeordnet, der an seinem äußeren Umfang mit einem bis an die Innenwand der Nabe 7 heranreichenden Bund versehen ist. Vor dem Bund des Stoßringes 12 ist ein erster Sprengring 9 in eine innen umlaufende Nut der Nabe 7 eingesetzt.

Am anderen Ende ist vor dem äußeren Kegelrollenlager 6 eine Achsmutter 10 mit einem angeformten Bund 11 angeordnet, der bis an die Innenwand der Nabe 7 heranreicht. Außen vor dem Bund 11 ist in eine umlaufende Nut der Nabe 7 ein zweiter Sprengring 12 eingesetzt.

Die Achsmutter 10 ist mit einem Innengewinde auf ein Außengewinde am freien Ende des Achsschenkels 2 aufgeschraubt. In dem freien Ende des Achsschenkels 2 sind orthogonal sich kreuzende Bohrungen 13 vorgesehen.

Die Achsmutter 10 hat eine Krone 14 mit in axialer Richtung verlaufenden und nach vorne offenen Schitzen 15. In einen der Schlitze 15 und eine der Bohrungen 13 ist ein Verriegelungsbolzen 16 eingesetzt. Der Verriegelungsbolzen 16 hat in seinem Kopf ein Loch 17 zum Einführen einer gebogenen Federklammer 17, die mit einem nach innen umgebogenen Haken 19 in einem der Schlitze 13 gesichert ist.

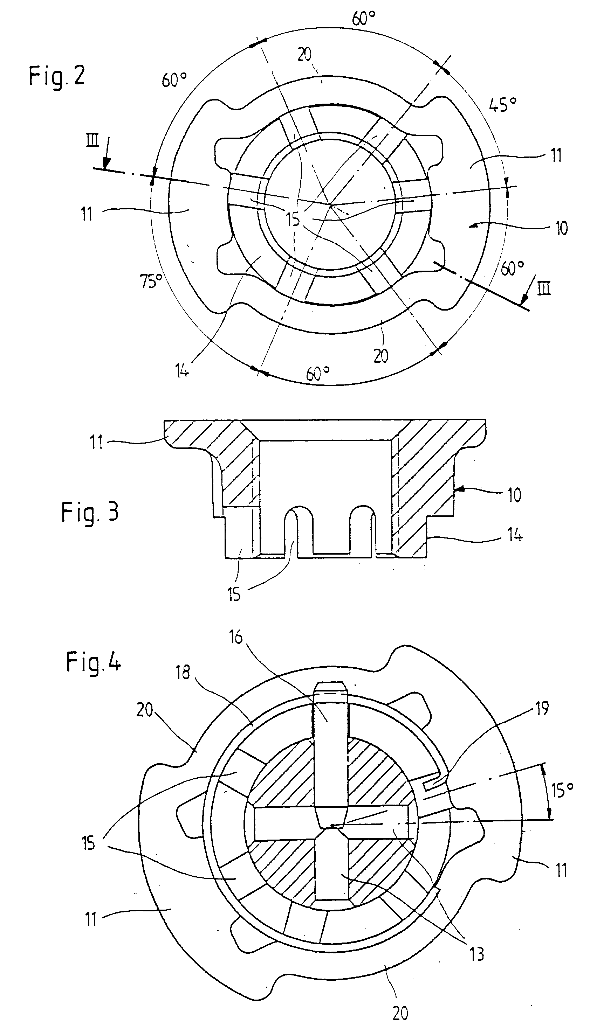

Die aus der Nabe 7, den beiden Kegelrollenlagern 5 und 6, dem Stoßring 8, den beiden Sprengringen 9 und 12 sowie der Achsmutter 10 bestehende Einheit kann vormontiert und insgesamt auf den Achsschenkel 2 aufgeschoben werden. Die Feineinstellung der Lagereinheit erfolgt dabei an der Achsmutter 10 mittels eines Drehmomentenschlüssels. Um eine Einstellung des Lagerspieles in möglichst kleinen Stufen zu ermöglichen, sind die Schlitze 15 in der Krone 14 der Achsmutter 10 asymmetrisch verteilt angeordnet. Aus der in Fig. 2 dargestellten Draufsicht ist ersichtlich, daß die Teilung der Schlitze 15 im Uhrzeigersinn gesehen zweimal 60°, einmal 45°, dann wieder zweimal 60° und noch einmal 75° beträgt. Mit dieser asymmetrischen Teilung ist es möglich, die Achsmutter 10 in kleinen Stufen von 15° einzustellen, weil dann immer einer der Schlitze 15 mit einer der Bohrungen 13 fluchtet, so daß ein Verriegelungsbolzen 16 eingeführt werden kann.

Der Bund 11 der Achsmutter 10 ist mit Aussparungen 20 versehen, um das Eintreten und das Atmen einer Fettfüllung zu ermöglichen, die in einer Radkapsel 21 angeordnet ist.

### Bezugszeichenliste

- 1: Achskörper
- 2: Achsschenkel
- 3: Lagersitz
- 4: Lagersitz
- 5: Kegelrollenlager
- 6: Kegelrollenlager
- 7: Nabe
- 8: Stoßring
- 9: Sprengring
- 10: Achsmutter
- 11: Bund
- 12: Sprengring
- 13: Bohrung
- 14: Krone
- 15: Schlitz
- 16: Verriegelungsbolzen
- 17: Loch
- 18: Federklammer
- 19: Haken
- 20: Aussparungen
- 21: Radkapsel

## Patentansprüche

1. Radlager, insbesondere für Anhängerachsen, mit einer auf einem Achsschenkel (2) mittels Lagern (5,6) drehbar gelagerten Nabe (7), die durch eine auf das freie Ende des Achsschenkels (2) aufgeschraubte Achsmutter (10) gehalten ist, wobei im freien Ende des Achsschenkels (2) sich orthogonal kreuzende Bohrungen (13) und in einer Krone (14) der Achsmutter (10) axial verlaufende Schlitze (15) zum Einführen eines Verriegelungsbolzens (16) angeordnet sind,
**dadurch gekennzeichnet,**
daß die Teilung der Schlitze (15) in der Krone (14) der Achsmutter (10) asymmetrisch ist.

2. Radlager nach Anspruch 1, dadurch gekennzeichnet, daß die Teilung im Uhrzeigersinn gesehen zweimal 60°, einmal 45°, wieder zweimal 60° und noch einmal 75° beträgt.

3. Radlager nach Anspruch 1 oder 2, dadurch gekennzeichnet, daß der Verriegelungsbolzen (16) in seinem Kopf ein Loch (17) hat und mit einer durch dieses Loch (17) gesteckten Federklammer (18) in seiner Verriegelungslage fixiert ist.

4. Radlager nach Anspruch 3, dadurch gekennzeichnet, daß die Federklammer (18) die Krone (14) der Achsmutter (10) auf einem Winkel von mehr als 270° umschlingt.

5. Radlager nach Anspruch 3 oder 4, dadurch gekennzeichnet, daß die Federklammer (18) wenigstens an einem Ende mit einem nach innen umgebogenen Haken (19) versehen ist, der in einen Schlitz (15) der Achsmutter (10) eingreift.

6. Radlager nach Anspruch 1, dadurch gekennzeichnet, daß die Radmutter (10) mit einem mit Aussparungen (20) versehenen, radialen Bund (11) versehen ist.

## Claims

1. Wheel bearing, in particular for trailer axles, having a hub (7) which is rotatably mounted on an axle stub (2) by means of bearings (5, 6) and is held by an axle nut (10) which is screwed onto the free end of the axle stub (2), orthogonally intersecting bores (13) being arranged in the free end of the axle stub (2) and axially extending slots (15) being arranged in a crown (14) of the axle nut (10) for introducing an interlocking pin (16), characterized in that the division of the slots (15) in the crown (14) of the axle nut (10) is asymmetrical.

2. Wheel bearing according to Claim 1, characterized in that the division, seen in the clockwise direction, is twice 60°, once 45°, again twice 60° and then once 75°.

3. Wheel bearing according to Claim 1 or 2, characterized in that the interlocking pin (16) has a hole (17) in its head and is fixed in its interlocking position by means of a spring clip (18) inserted through said hole (17).

4. Wheel bearing according to Claim 3, characterized in that the spring clip (18) surrounds the crown (14) of the axle nut (10) over an angle of more than 270°.

5. Wheel bearing according to Claim 3 or 4, characterized in that the spring clip (18) is provided, at least at one end, with a hook (19) which is bent inwards and engages in a slot (15) of the axle nut (10).

6. Wheel bearing according to Claim 1, characterized in that the wheel nut (10) is provided with a radial collar (11) provided with cutouts (20).

## Revendications

1. Roulement de roue, en particulier pour essieux de remorques, comprenant un moyeu (7) monté en rotation au moyen de roulements (5, 6) sur une fusée d'essieu (2) et retenu par un écrou d'essieu (10) vissé sur l'extrémité libre de la fusée d'essieu (2), des perçages (13) se croisant de manière orthogonale dans l'extrémité libre de la fusée d'essieu (2) et des fentes (15) ménagées axialement dans une couronne (14) de l'écrou d'essieu (10) étant prévus pour y introduire un goujon de verrouillage (16), caractérisé en ce que l'écartement des fentes (15) pratiquées dans la couronne (14) de l'écrou d'essieu (10) est asymétrique.

2. Roulement de roue selon la revendication 1, caractérisé en ce que l'écartement vu dans le sens horaire est égal à deux fois 60°, une fois 45°, à nouveau deux fois 60° et une fois 75°.

3. Roulement de roue selon la revendication 1 ou 2, caractérisé en ce que le goujon de verrouillage (16) comporte, dans sa tête, un trou (17) et est immobilisé en position de verrouillage par un étrier élastique (18) inséré dans ce trou (17).

4. Roulement de roue selon la revendication 3, caractérisé en ce que l'étrier élastique (18) entoure la couronne (14) de l'écrou d'essieu (10) sur un angle supérieur à 270°.

5. Roulement de roue selon la revendication 3 ou 4, caractérisé en ce qu'au moins à l'une de ses extrémités, l'étrier élastique (18) comporte un crochet (19) qui est replié vers l'intérieur et qui s'engage dans une fente (15) de l'écrou d'essieu (10).

6. Roulement de roue selon la revendication 1, caractérisé en ce que l'écrou de roue (10) est pourvu d'un collet radial (11) comportant des évidements (20).
